# EUROPÄISCHE PATENTANMELDUNG

(11) **EP 3 315 667 A1**
(43) Veröffentlichungstag der Anmeldung: **02.05.2018**
(21) Anmeldenummer: 17198859.5
(22) Anmeldetag: 27.10.2017
(51) Int. Cl.: E02B 7/28, E03F 5/10, F16K 3/02

(54) **SCHIEBERELEMENT FÜR AGGRESSIVE MEDIEN**

(30) Priorität: 31.10.2016 DE 102016120757
(71) Anmelder: IBS Technics GmbH, 86672 Thierhaupten (DE)
(72) Erfinder: Schaubeck, Sebastian, 82140 Olching (DE)
(74) Vertreter: Stolmár & Partner Patentanwälte PartG mbB

(57) **Zusammenfassung**

Die Erfindung betrifft ein Element für eine gehäuselose Armatur umfassend eine Basisplatte, die im Betrieb in Kontakt mit dem zu haltenden Medium steht und die eine Vielzahl von Durchgangsöffnungen aufweist und längliche Verstärkungsstreben mit Steckvorsprüngen, wobei die Steckvorsprünge von der Rückseite in die Durchgangsöffnungen gesteckt und von der Vorderseite an den Durchgangsöffnungen mit einer Schweißnaht verschweißt sind.

## Beschreibung

### Gebiet der Erfindung

Die Erfindung betrifft ein Element für eine gehäuselose Armatur, beispielsweise einen Schieber für Becken mit aggressiven Flüssigkeiten, wie es in einer Kläranlage vorhanden ist, und ein Verfahren zum Herstellen eines solchen Elements.

### Stand der Technik

Gehäuselose Armaturen sind Konstruktionen, welche jede Art von Wasserwegen außerhalb eines Gehäuses wie beispielsweise einem Rohr regeln und steuern. Gehäuselose Armaturen werden in der Regel aus Edelstahl gefertigt, da diese Bauteile meistens aggressiven Medien ausgesetzt werden (z.B. in Kläranlagen) und sich Edelstahl durch eine hohe Korrosionsbeständigkeit gegenüber aggressiven Stoffen auszeichnet. Diese Eigenschaft entsteht aufgrund einer Passivschicht des Edelstahls, die aus dichten homogenen Chromoxiden und Chromhydroxiden besteht und den Edelstahl vor Angriffen bewahrt.

Gehäuselose Armaturen bestehen aus einem Blatt, Verstärkungen des Blattes, um dem Wasserdruck standzuhalten, Rahmen, Bodenschiene, Kopfleiste, Konsolen, Dichtungen und Joch. Die Bauteile werden verschweißt. Stand der Technik für das Verschweißen sind Kehlnähte. Zur Vorbereitung des Schweißens müssen die Verstärkungen zunächst von hinten an das Blatt geheftet werden. Dazu muss der Arbeiter die Verstärkung händisch oder mit einer Vorrichtung positionieren und anschließend Heftpunkte mit dem Schweißgerät setzen. Diese Arbeit ist zeitaufwendig, fehleranfällig und führt zu Anlauffarben (entspricht Schädigung der Passivschicht) am Blatt. Das Verschweißen der Verstärkungen auf der Rückseite des Blattes mit Kehlnähten auf beiden Seiten der Rippen führt ebenfalls zu Anlauffarben und ferner dazu, dass sich das Bauteil beim Abkühlen nach dem Fertigungsprozess verzieht. Durch den Verzug des Bauteils entsteht Aufwand für das Richten des Blattes, beispielsweise mit Richtpressen.

Durch das Schweißen entsteht eine große Hitze am und im Bauteil, die die Passivschicht in der Umgebung der Wärmeeinbringstelle beschädigt bzw. zerstört und durch eine Oxidschicht ersetzt. Diese Oxidschicht erkennt man an den Anlauffarben des Materials.

Die Anlauffarben entstehen auf der Oberfläche des Edelstahls durch eine Oberflächenoxidation mit Sauerstoff der Luft, anhaftendem Restsauerstoff, Kohlendioxid oder Wasser. Diese Oxidschicht unterscheidet sich in der Elementzusammensetzung und im Schichtaufbau von der vorherigen Passivschicht am Edelstahl. Kommt das Edelstahlbauteil anschließend mit aggressiven Stoffen in Berührung, so entscheidet die Deckschicht (Passivschicht oder Oxidschicht) über die Korrosionsbeständigkeit des Bauteils. Durch das Schweißen wird also die Korrosionsbeständigkeit der Edelstahlplatte stark beeinträchtigt.

Um diese Korrosionsbeständigkeit wiederherzustellen, werden die Bauteile bisher einem chemischen Prozess unterzogen, dem Beizen. Beim Vorbereiten des Beizprozesses muss die Oberfläche von Schmiermittel, Ölen, Emulsionen, Staub, Fett, Folien usw. gereinigt werden. Diese Arbeiten des Vorreinigens erfolgen oft mit wässrigen alkalischen oder sauren Lösungen (z.B. Kalilauge, Glykoäther), wobei diese Flüssigkeiten schädlich für Mensch und Umwelt sind. Beim Beizen selber werden dann die oben genannten Beschädigungen des Edelstahls beseitigt und die Korrosionsbeständigkeit wiederhergestellt. Das Edelstahlbeizen wird in der Regel mit Säuremischungen z.B. aus Salpetersäure oder Flusssäure ausgeführt. Diese chemischen Stoffe sind ebenfalls schädlich für Mensch und Umwelt. Außerdem finden während des Beizvorgangs chemische Reaktionen statt, die schädliche bzw. giftige Dämpfe freisetzen können. Anschließend müssen die Bauteile nach der Beizbehandlung gründlich gereinigt werden, insbesondere auch kleinste Spalten, Ecken und Hohlräume. Wenn dies nicht geschieht, kann es nachträglich zu Spaltkorrosionen kommen. Nach jeder Beizbehandlung müssen die Werkstücke deshalb möglichst rückstandslos von allen Beizmitteln und Beizrückständen befreit werden. Dies erfolgt in der Regel durch das Abspülen des Werkstückes mit Trinkwasser.

### Kurze Beschreibung der Figuren

Figur 1 ist eine isometrische Ansicht eines in ein Tor verbauten Schiebers;
Figuren 2a- 2c sind verschiedene Ansichten einer Basisplatte;
Figuren 3a und 3b sind verschiedene Ansichten einer ersten Verstärkungstrebe;
Figuren 4a und 4b sind verschiedene Ansichten einer zweiten Verstärkungstrebe;
Figuren 5a und 5b sind verschiedene Ansichten einer Mittelstrebe;
Figur 6 ist eine isometrische Ansicht eines fertig zusammengebauten Schiebers.

### Darstellung der Erfindung

Aufgabe der vorliegenden Erfindung ist es daher, ein Element für gehäuselose Armaturen bereitzustellen, bei dem die Herstellung möglichst einfach und schnell zu bewerkstelligen ist und das an möglichst geringen Flächen einer Hitzebeeinträchtigungen unterworfen ist.

Diese Aufgabe wird gelöst durch ein Element für eine gehäuselose Armatur nach Anspruch 1 und ein Verfahren zur Herstellung eines solchen Elements nach Anspruch 8. Weitere, die Erfindung ausgestaltende Merkmale sind in den abhängigen Ansprüchen enthalten.

Ein erfindungsgemäßes Element für eine gehäuselose Armatur umfasst eine Basisplatte, die im Betrieb in Kontakt mit dem zu haltenden Medium steht und die eine Vielzahl von Durchgangsöffnungen aufweist, längliche Verstärkungsstreben mit Steckvorsprüngen, wobei die Steckvorsprünge von der Rückseite in die Durchgangsöffnungen gesteckt und von der Vorderseite an den Durchgangsöffnungen mit einer Schweißnaht verschweißt sind. Dadurch, dass die Stahlplatte nur an den Durchgangsöffnungen verschweißt werden muss, ist die Hitzebeeinträchtigung viel geringer als bei den Kehlnähten, die von der Rückseite und beidseitig der Rippen durchgeführt werden und so jede Stelle einer doppelten Hitzebelastung aussetzen. Ferner ist die Vorbereitung für das Verschweißen wesentlich weniger zeitintensiv, da die einzelnen Rippen in dafür vorgesehene Durchgangsöffnungen gesteckt werden können und so an ihrem Platz gehalten werden können ohne die aufwändige Vormontage mit Heftpunkten.

Die Vorsprünge und die Durchgangsöffnungen weisen vorzugsweise eine Spielpassung auf. Dadurch ist es einfach möglich, sie händisch ineinanderzuschieben, gleichzeig sind sie aber fest genug, um alleine ohne weitere Befestigung zu halten und von der Vorderseite verschweißt zu werden.

Vorzugsweise ist die Schweißnaht unter einer Schutzatmosphäre geschweißt. Dies kann beispielsweise mit einem speziellen Schweißgerät geschehen, das das Schutzgas beim Schweißen selbst ausstößt, kann aber auch in Vorrichtung oder auch einer Kammer durchgeführt werden, die eine Schutzgasatmosphäre aufweist.

Vorzugsweise sind die Steckvorsprünge der Verstärkungsstreben zumindest teilweise länglich ausgebildet. Das heißt, dass die Erstreckung in einer Richtung länger ist als in der anderen, insbesondere jedoch rechteckig. Dadurch lassen sich die Verstärkungsrippen gleichzeitig mit dem Einstecken in die Aussparungen in der richtigen Position ausrichten, insbesondere wenn auch die Aussparungen eine komplementäre Form aufweisen.

Vorzugsweise sind die länglichen Verstärkungsstreben zumindest zum Teil mit Steckschlitzen versehen, insbesondere an einem Bereich der Steckvorsprünge, um zwei Verstärkungsstreben ineinanderzuschieben. Die Verstärkungsstreben stehen vorzugsweise in einem 90°-Winkel zueinander. Steckschlitze sind eine weitere einfache Möglichkeit, die Verstärkungsrippen auf der Rückseite der Basisplatte stabil zu befestigen, ohne dass die Verstärkungsstreben verschweißt werden müssen. Die länglichen Verstärkungsstreben weisen vorzugsweise einen I-förmigen Querschnitt auf. Ferner können die länglichen Verstärkungsstreben an den Enden der Längserstreckung ebenfalls zumindest einen Steckvorsprung aufweisen. Dadurch können auch die Randstreben ineinandergesteckt werden.

Ein erfindungsgemäßes Verfahren zur Herstellung eines Elements für eine gehäuselose Armatur umfasst die Schritte des Bereitstellens einer Basisplatte mit einer Vielzahl von Durchgangsöffnungen, das Bereitstellen von länglichen Verstärkungsstreben mit Steckvorsprüngen, das Einstecken der Steckvorsprünge in die Durchgangsöffnungen von der Rückseite der Basisplatte und das Verschweißen der Steckvorsprünge an den Durchgangsöffnungen von der Vorderseite der Basisplatte. Durch dieses Vorgehen wird die Hitzeeinwirkung auf die Basisplatte minimiert. Ferner wird das Verschweißen vorzugsweise in einer Schutzgasatmosphäre durchgeführt, so dass überhaupt keine Veränderungen der Oberflächenschicht auftreten können.

### Kurze Beschreibung der Figuren

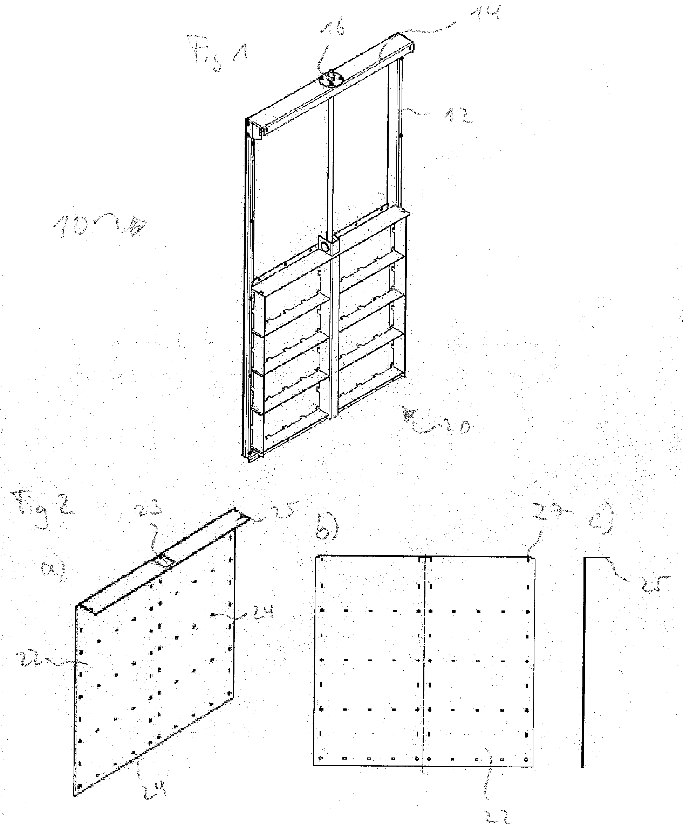

Figur 1 zeigt einen erfindungsgemäßen Schieber in einer isometrischen Ansicht;
Figur 2 zeigt die isometrische Ansicht verschiedener Verstärkungsstreben;

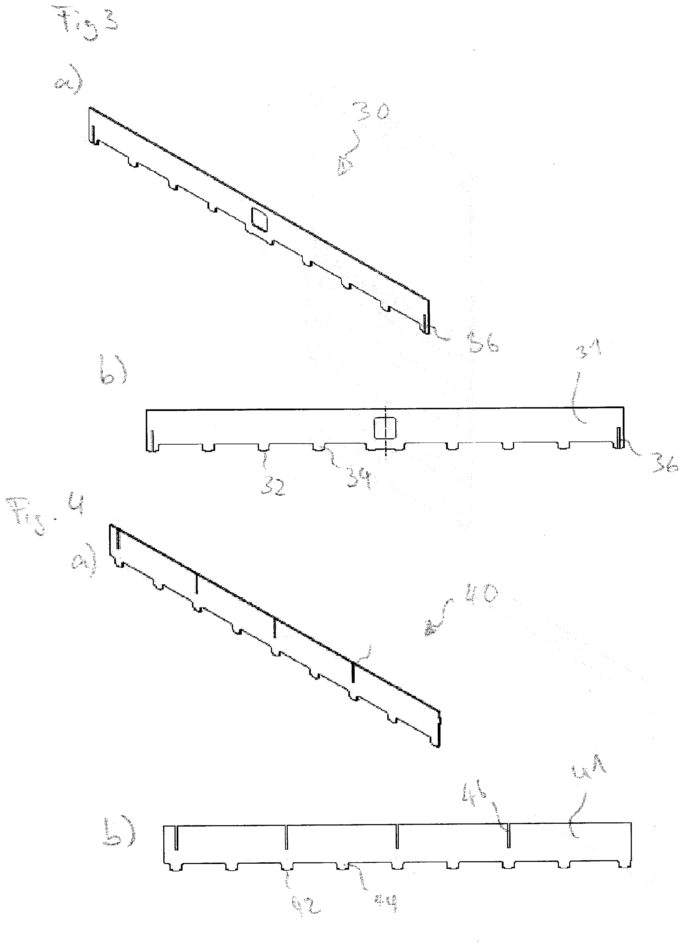

Figur 3 zeigt eine besondere Ausführungsform einer Verstärkungsstrebe; und
Figur 4 zeigt eine Basisplatte.

### Beschreibung der bevorzugten Ausführungsformen

Wenn im Folgenden Richtungsangaben verwendet werden, beziehen sich diese immer auf die Richtungen wie sie in den jeweiligen Figuren zu sehen sind.

Figur 1 zeigt ein montiertes Schleusentor 10 mit einem Schieber 20 inklusive Rahmen 12 und Joch 14. Ein solches Schleusentor 10 wird in einen Kanal beispielsweise am Ausgang einer Leitung eingesetzt und der Schieber 20 dann über das Joch 14 und eine daran angebrachte Hubvorrichtung 16 nach oben und nach unten verfahren. An den Kontaktstellen zwischen Rahmen und Schieber 20 sind vorzugsweise Dichtungen aus Gummi vorgesehen.

Ein erfindungsgemäßer Schieber 20 umfasst eine Basisplatte 22 und mehrere Verstärkungsrippen 30, 40, die auf der Rückseite an der Basisplatte 22 befestigt werden und die Struktur der Basisplatte so verstärken. Die Basisplatte 22 kann jede beliebige Form aufweisen, ist in der Regel aber quadratisch oder rechteckig. In regelmäßigen Abständen sind in der Platte Durchgangsbohrungen 24 vorgesehen, die vorzugsweise länglich ausgebildet sind, insbesondere rechteckig. Am oberen Rand kann die Basisplatte gefaltet sein, so dass ein Teil 25 der Basisplatte 22 abgewinkelt und insbesondere rechtwinklig von dem Rest der Basisplatte 22 nach hinten vorsteht. Dieser Teil festigt die Basisplatte insbesondere gegenüber einem Verbiegen auch ohne zusätzliche Verstärkungsrippen 30, 40. Der abgewinkelte Teil 25 kann Aussparungen 27 aufweisen, in die dann ein entsprechender Vorsprung einer verstärkungsrippe eingesetzt werden kann. Alternativ können auch Steckschlitze (nicht dargestellt) in den abgewinkelten Teil 25 eingebracht werden

Um den Schieber 20 herzustellen, werden an der Rückseite der Basisplatte 22 weitere Verstärkungsrippen 30, 40, 50 angebracht. Diese können alle identisch aussehen und mittels Heftpunkten miteinander verschweißt werden, da diese Bauteile nicht in direktem Kontakt mit den aggressiven Medien stehen und daher die Funktion des Schiebers durch eine verminderte Korrosionsbeständigkeit nicht so stark beeinträchtigt wird. Vorzugsweise sind jedoch auch die Verstärkungsrippen 30, 40, 50 aufeinander abgestimmt ausgebildet und insbesondere mit einer Mechanik ausgestaltet, die eine Verbindung der Verstärkungsrippen 30, 40, 50 ermöglicht, die mit möglichst wenig Schweißarbeit verbunden ist.

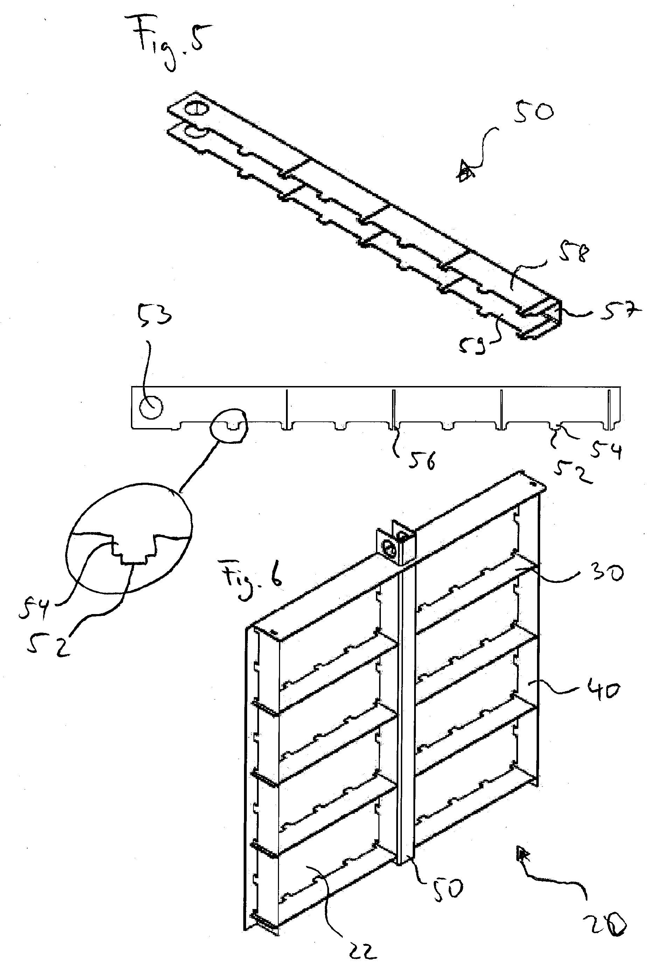

In den Figuren 3 bis 5 sind verschiedene Verstärkungsrippen 30, 40, 50 in jeweils einer isometrischen und einer Seitenansicht dargestellt. Die Figuren 3a und 3b zeigt dabei eine Verstärkungsrippe 30, die in der vorliegenden Ausführungsform als Querstrebe verwendet wird, die Figuren 4a und 4b zeigen die senkrecht angeordneten Verstärkungsrippen und die Figuren 5a und 5b zeigen eine Mittelrippe, die noch stabiler ausgeführt sein kann.

Die Verstärkungsrippen 30 und 40, die als Querstrebe und als senkrechte Verstärkungsrippe angeordnet sind, sind sehr ähnlich ausgebildet. Eine mögliche Mittelrippe unterscheidet sich etwas in der Ausgestaltung. Allen Verstärkungsrippen gemeinsam ist, dass entlang der Langseite mehrere Steckvorsprünge 32, 42 auf der Unterseite ausgebildet sind, die in die Aussparungen 24 der Basisplatte 22 eingesteckt werden. Die Steckvorsprünge 32, 42, 52 sind vorzugsweise in regelmäßigen und gleichmäßigen Abständen vorgesehen. Ferner können kleine Standvorsprünge 34, 44, 54 an der Unterseite von der restlichen Unterkante der Verstärkungsrippen 30, 40, 50 abgesetzt sein, auf der die Steckvorsprünge 32, 42, 52 dann angeordnet sind. Das heißt zwischen den Standvorsprüngen 34, 44, 54 sind Aussparungen vorgesehen. Die Standvorsprünge 34, 44, 54 erleichtern zum Einen das Einsetzen der Steckvorsprünge in die Aussparungen 24, zum Anderen ist auch die Handhabung einfacher, weil die Verstärkungsrippen 30, 40, 50 weniger Gewicht haben. Die Steckvorsprünge sind in der Vergrößerung in Figur 5 genauer zu erkennen, sind aber bevorzugt für alle Verstärkungsrippen 30, 40, 50 gleich ausgebildet. An den Stirnseiten (die in Figur 3b und 4b rechts und links angeordnet sind) können ebenfalls Steckvorsprünge vorgesehen sein, die in die Aussparungen am abgewinkelten Teil 23 der Basisplatte eingreifen.

In den gezeigten Ausführungsformen sind weiterhin Steckschlitze 36, 46 gezeigt, mit denen die einzelnen Verstärkungsrippen 30, 40, 50 zusammengesteckt werden. Die Schlitze sind bevorzugt in einem Bereich angeordnet, an dem auch die Steckvorsprünge 32, 42, 52 und die Standvorsprünge 34, 44, 54 vorgesehen sind. Die Schlitze sind bei den ineinander zu steckenden Rippen jeweils oben und unten angeordnet. Die einzelnen Verstärkungsrippen 30, 40, 50 sind auf der Basisplatte 22 vorzugsweise in einem rechten Winkel zueinander angeordnet.

Die beiden Verstärkungsrippen 30 und 40, die als Querstrebe und als senkrechte Verstärkungsrippe vorgesehen sind, sind als dünne und längliche Edelstahlplatten ausgebildet, insbesondere I-förmig ausgebildet. Die Mittelrippe kann ein, zwei oder mehrteilig ausgebildet sein. Vorzugsweise ist am oberen Ende der Mittelrippe eine Befestigungseinrichtung 53 zur Hubeinrichtung 16 vorgesehen. An dieser Befestigungseinrichtung 53 kann die Hubeinrichtung 16 den Schieber anheben. In einer Ausführungsform weist die Mittelrippe 50 zwei parallele Rippen 58, 59 auf, die mit einem oberen Steg 57 verbunden sind. An den beiden parallelen Rippen sind die Steckvorsprünge 32, 42, 52 vorgesehen. Im Querschnitt hat die Mittelrippe daher vorzugsweise eine U-Form. Die Schlitze 56 sind ebenfalls in beiden parallelen Rippen 58, 59 und vorzugsweise im Bereich der Steckvorsprünge 52 ausgebildet. Die Verstärkungsrippen 30 können lediglich bis zur Mittelrippe vorgesehen sein, so dass auf beiden Seiten der Mittelrippe 50 jeweils separate Rippen 30 vorgesehen sind. In einer anderen Ausführungsform der Mittelrippe wird der Verbindungssteg 57 weggelassen. Dadurch verbleiben zwei nahe aneinander liegende parallelen Rippen 58, 59 in I-Form. Die Mittelrippe kann auch komplett weggelassen werden. Die Befestigungseinrichtung 53 ist dann an einem rippenähnlichen verstärkten Element ausgebildet, das wie eine Ausführungsform der Mittelrippe 50 ausgestaltet sein kann, allerdings nicht über die gesamte Länge der Basisplatte 22 verläuft. Insbesondere erstreckt sich eine solche Befestigungseinrichtung 53 vorzugsweise lediglich 15-40 cm nach unten, und insbesondere maximal bis zur ersten Querrippe 30.

Die für die einzelnen Elemente verwendeten Edelstahlplatten weisen vorzugsweise eine Dicke von 3 mm bis 10 mm auf, weiter vorzugsweise von 4-6 mm und insbesondere 4.

Zur Herstellung eines Schiebers der in Figur 6 gezeigt ist wird zuerst die Basisplatte 22 bereitgestellt und mit den Durchgangslöchern 24 versehen. Dann werden die Querstreben 30 eingesteckt, die senkrechten Verstärkungsrippen 40 und die Mittelrippe 50 zusammengesteckt und die die Steckvorsprünge 32 der Verstärkungsrippen in die entsprechenden Aussparungen 24 eingesteckt. Dabei wird die Mittelrippe 50 auch durch das Durchgangsloch 23 hindurch geschoben. Wenn alle Steckvorsprünge in den entsprechenden Aussparungen 24 eingesteckt sind, werden an der Vorderseite der Basisplatte 22 die Steckvorsprünge verschweißt, insbesondere mit einer I-Naht. Danach ist der Schieber fertig, um in ein Tor montiert zu werden.

Das Verschweißen kann mit einem Schweißgerät durchgeführt werden, das um die Schweißflamme herum ein Schutzgas ausströmt.

### Bezugszeichenliste

Tor 10
Rahmen 12
Joch 14
Hubvorrichtung 16
Schieber 20
Basisplatte 22
Durchgangsloch 23
Aussparung 24
abgewinkelter Teil 25
Verstärkungsrippe 30
Hauptkörper 31
Steckvorsprung 32
gehobener Sitz 34
Steckschlitz 36
Verstärkungsrippe 40
Hauptkörper 41
Steckvorsprung 42
gehobener Sitz 44
Steckschlitz 46
Verstärkungsrippe 50
Hauptkörper 51
Steckvorsprung 52
Befestigungseinrichtung 53
gehobener Sitz 54
Steckschlitz 56
oberer Steg 57
Seitenrippen 58, 59

## Patentansprüche

1. Element für eine gehäuselose Armatur umfassend
eine Basisplatte (22), die im Betrieb in Kontakt mit dem zu haltenden Medium steht und die eine Vielzahl von Durchgangsöffnungen (24) aufweist;
längliche Verstärkungsstreben (30, 40, 50) mit Steckvorsprüngen (32, 42, 52), wobei die Steckvorsprünge (32, 42, 52) von der Rückseite in die Durchgangsöffnungen (24) gesteckt und von der Vorderseite an den Durchgangsöffnungen (24) mit einer Schweißnaht verschweißt sind.

2. Element nach Anspruch 1, bei dem die Vorsprünge und die Durchgangsöffnungen (24) und die Steckvorsprünge (32, 42, 52) eine Spielpassung aufweisen.

3. Element nach einem der vorhergehenden Ansprüche, bei dem die Schweißnaht unter Schutzatmosphäre geschweißt ist.

4. Element nach einem der vorhergehenden Ansprüche, bei dem die Steckvorsprünge (32, 42, 52) der Verstärkungsstreben (30, 40, 50) zumindest teilweise länglich ausgebildet sind.

5. Element nach einem der vorhergehenden Ansprüche, bei dem die Verstärkungsstreben (32, 42, 52) an einem Bereich der Steckvorsprünge mit Steckschlitzen versehen sind, um zwei Verstärkungsstreben (32, 42, 52) ineinander zu schieben.

6. Element nach einem der vorhergehenden Ansprüche, bei dem die Verstärkungsstreben (32, 42, 52) zumindest teilweise einen I-förmigen Querschnitt aufweisen.

7. Element nach einem der vorhergehenden Ansprüche, bei dem die Verstärkungsstreben (32, 42, 52) an den Enden der Längserstreckung ebenfalls zumindest einen Steckvorsprung aufweisen.

8. Tor (10) für das Verschließen und Öffnen eines Gerinnes für ein Fluid, umfassend ein Element nach einem der vorhergehenden Ansprüche.

9. Verfahren zur Herstellung eines Elements für eine gehäuselose Armatur, umfassend die Schritte
Bereitstellen einer Basisplatte mit einer Vielzahl von Durchgangsöffnungen;
Bereitstellen von länglichen Verstärkungsstreben mit Steckvorsprüngen;
Einstecken der Steckvorsprünge in die Durchgangsöffnungen von der Rückseite der Basisplatte; und
Verschweißen der Steckvorsprünge an den Durchgangsöffnungen von der Vorderseite der Basisplatte.

10. Verfahren nach Anspruch 8, bei dem das Verschweißen in einer Schutzgasatmosphäre durchgeführt wird.
